# FASCICULE DE BREVET EUROPEEN

(11) **EP 2 579 961 B1**
(45) Date de publication et mention de la délivrance du brevet: **02.11.2016**
(21) Numéro de dépôt: 11724255.2
(22) Date de dépôt: 10.06.2011
(51) Int. Cl.: B01D 53/26, C01B 31/20, F25J 3/06

(54) **PROCÉDÉ ET APPAREIL DE SÉCHAGE ET DE COMPRESSION D'UN FLUX RICHE EN CO2**
VERFAHREN UND VORRICHTUNG ZUM TROCKNEN UND KOMPRIMIEREN EINES CO2 REICHEN STOFFSTROMS
PROCESS AND APPARATUS FOR DRYING AND COMPRESSING A CO2 RICH STREAM

(30) Priorité: 11.06.2010 FR 1054640
(43) Date de publication de la demande: 17.04.2013
(73) Titulaire: L'Air Liquide Société Anonyme pour l'Etude et l'Exploitation des Procédés Georges Claude, 75007 Paris (FR)
(72) Inventeur: BRIGLIA, Alain, F-49140 Corze (FR); COURT, Phiilppe, F-94300 Vincennes (FR); DARDE, Arthur, F-75005 Paris (FR)
(74) Mandataire: Mercey, Fiona Susan
(86) Numéro de dépôt international: PCT/EP2011/059721
(87) Numéro de publication internationale: WO 2011/154535

(56) Documents cités:
- WO-A1-2009/127217
- FR-A1- 2 918 579
- US-A- 4 478 612

## Description

La présente invention est relative à un procédé et à un appareil de séchage et de compression d'un flux riche en CO₂.

La compression de flux riches en CO₂ et humides nécessite l'utilisation de compresseur en acier inoxydable - voire en matériaux plus nobles encore, comme les aciers à haute teneur en nickel - afin d'éviter la corrosion par l'acide carbonique, ou d'autres acides plus forts qui découleraient de la présence d'impuretés dans le flux riche en CO₂, comme les oxydes d'azote ou de soufre.

Un fluide riche en CO₂ contient entre 30 et 100% molaire en base sèche de CO₂. L'air ambiant est 25 fois plus pauvre en CO₂ que la limite basse de 1% molaire.

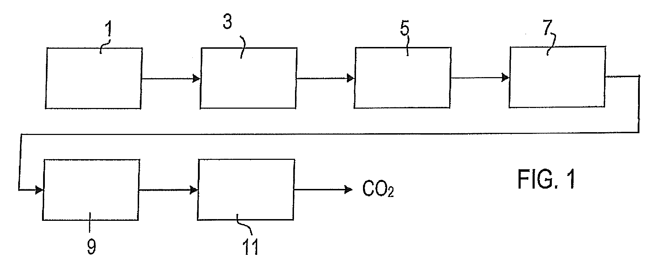

C'est ainsi que l'état de l'art pour le traitement de tels flux riches en CO₂ est schématiquement représenté comme sur la figure 1.
- 1 = Mise à disposition du flux riche en CO₂ (exemples : sortie d'une colonne de régénération d'un solvant (type amines) ou fumées d'oxycombustion après un filtre primaire de type électrostatique ou de filtre à manche)
- 3 = étape facultative d'épuration fine (jusqu'à un niveau typique de l'ordre de la partie par million) en élément soufrés
- 5 = compression dans un compresseur dont les matériaux en contact avec le gaz humide sont en acier résistant à la corrosion
- 7 = séchage du gaz par adsorption (par exemple adsorbant de type alumine activée, tamis moléculaire, gel de silice)
- 9 = épuration facultative du gaz riche en CO₂ de ses constituants légers (oxygène, argon, hydrogène, monoxyde de carbone, azote, etc) et/ou de ses constituants plus lourds (NO₂, N₂O₄, SO₂, etc.), les variantes possibles de cette étape sont abondamment décrites dans de précédentes demandes de brevet
- 11 = étape de compression du produit final riche en CO₂ ou de liquéfaction du produit final riche en CO₂ afin de le mettre à disposition d'un organe de transport (par canalisation ou bateau) ou pour son utilisation dans un procédé.

WO-A-2009/127217 décrit un procédé selon le préambule de la revendication 1 et un appareil selon le préambule de la revendication 10 mais ne décrit pas l'épuration du mélange d'eau et d'antigel provenant de la colonne de lavage.

La présente invention vise à réduire considérablement le coût de l'unité de compression 5 et éventuelle unité de purification 3 du flux riche en CO₂ en retirant suffisamment d'eau en amont de l'étape de compression 5 pour éviter la condensation de celle-ci durant les phases de compression et refroidissement successives dans le compresseur, cela permettant l'utilisation d'acier carbone ou faiblement allié, au lieu d'acier inoxydable.

Un deuxième aspect de l'invention consiste à réduire le coût de l'unité de séchage 7 lorsqu'une purification par condensation partielle et éventuelle distillation est souhaitée pour améliorer la composition du CO₂ produit. Cette unité a pour vocation essentielle de retirer suffisamment d'eau du flux riche en CO₂ pour éviter le gel de cette eau lors du refroidissement dans l'unité 9. Des teneurs résiduelles en eau de l'ordre de la partie par million peuvent ainsi être nécessaires pour éviter le gel à -56°C, une température plancher en raison de la solidification du CO₂.

Dans un premier temps, considérons comment se passer de l'unité de séchage, tout en refroidissant à environ -55°C le flux riche en CO₂.

L'invention consiste à injecter un agent antigel - du méthanol par exemple - en quantité suffisante pour que le point de solidification de l'eau soit inférieur à la température la plus froide de l'unité 9 (par exemple pour un point de solidification de l'eau de - 54°C, il faut injecter au moins 1 kg de méthanol, pour 1 kg d'eau contenu dans le gaz) puis à refroidir le mélange jusqu'à la température souhaité.

Une amélioration consiste à refroidir le gaz contenant l'agent antigel jusqu'à une température intermédiaire, bien sûr supérieure à la température finale souhaitée, de telle façon qu'une fraction significative de l'eau, et de l'agent antigel contenu soit condensée et ainsi recyclée, limitant la consommation de l'agent antigel. Plus la température atteinte est froide, et plus la condensation de l'eau est importante. Le gaz résultant de cette condensation intermédiaire est refroidi ensuite jusqu'aux températures souhaitées pour la suite du procédé où intervient une nouvelle condensation d'eau et d'agent antigel.

On peut envisager une seconde injection d'agent antigel après cette première condensation selon les fractions résultantes d'eau et d'agent antigel dans la phase gazeuse. L'intérêt d'une injection multiple sera de réduire la quantité totale à injecter car chaque injection sera adaptée à la condensation qui suit. Le système devenant cependant plus complexe, une étude technico-économique jugera de l'intérêt de multiplier les injections d'agent antigel.

Une approche similaire permet de retirer suffisamment d'eau avant la compression pour utiliser un compresseur en acier carbone ou faiblement allié. Il s'agît donc de refroidir le flux riche en CO₂ jusqu'à ce que la fraction restante en eau assure que le point de rosée ne sera jamais atteint dans les différents étages de compression et refroidissement du compresseur. Ainsi un refroidissement à -15°C et 0.9 bar absolu d'un flux contenant environ 90% de CO₂ en volume et en base sèche permet d'abaisser le point de rosée à la sortie du compresseur (20 bars absolus dans notre exemple) à moins de 30°C, soit une température dont on peut facilement s'assurer qu'elle ne sera pas atteinte lors des refroidissements aux inter-étages et en sortie du compresseur. Un contrôle de la température du flux comprimé par régulation du débit d'eau de réfrigération en fonction de la température du gaz en sortie du réfrigérant est un exemple permettant de maintenir le flux comprimé au-delà du point de rosée et donc de la zone de corrosion.

Par rapport à l'existant, il faut donc ajouter des moyens d'injection d'un agent antigel dans le flux riche en CO₂, ainsi que des moyens de réfrigération poussée pour atteindre des températures de l'ordre de -15°C à faible pression (en générale une pression proche de la pression atmosphérique).

Les avantages de cette invention sont multiples :
- Le compresseur et les réfrigérants inter-étages sont donc en acier carbone ou faiblement allié.
- La température d'aspiration est notablement abaissée par rapport à l'état de l'art : entre une aspiration à 20°C et une aspiration à -15°C, le débit volumique - et donc la taille de la première roue de compression, qui définit la taille du compresseur, diminue de 7% si l'on considère 100mbars de perte de charge pour la réfrigération (de 1 bar absolu à 0.9bar a). Cela se traduit par un gain en investissement sur la machine.

- La température d'aspiration est stabilisée au cours de l'année, ce qui permet d'opérer exactement aux conditions de conception et donc d'améliorer l'efficacité moyenne de la machine.
- Le compresseur ne doit pas être dimensionné sur une température d'aspiration élevée qui ne sera rencontrée que quelques jours dans l'année.
- La puissance de compression est notablement réduite, à la fois par l'absence de l'essentiel des molécules d'eau et par l'aspiration plus froide.
- Le compresseur joue le rôle d'un mélangeur très efficace pour l'agent antigel dans le gaz à traiter. Cela est primordial en amont de l'unité de purification 9, car la teneur en eau résiduelle étant très faible (de l'ordre de quelques centaines de parties par million), la quantité d'agent antigel à injecter est aussi très faible, ce qui rend l'injection de l'agent antigel très délicate, car il faut s'assurer que le mélange soit très homogène (antigel dans le gaz).
- Il se trouve en effet que la fraction d'agent antigel restant en phase vapeur est sensiblement la même que la fraction d'eau et assure ainsi que les injections intermédiaires d'agent antigel sont superflues.
- On évite un coûteux équipement de séchage par adsorption.
- On évite la pénalité énergétique de la régénération de l'unité d'adsorption.

Une autre variante de l'invention consiste à considérer qu'en absence d'eau, les oxydes de soufre et les oxydes d'azote ne vont pas se condenser sous forme d'acide. En ce qui concerne l'acide nitrique, son point de rosée étant proche de celui de l'eau, la situation ne change pas, en première approximation, qu'on les considère ou pas. En ce qui concerne l'acide sulfurique, son point de rosée varie entre 70°C et 150°C environ selon les pressions et concentrations considérées.

L'invention permet de ne pas épurer le flux riche en CO₂ en oxyde de soufre avant la compression. Les oxydes de soufre seront alors soit séparés par lavage avec un liquide basique dans la colonne de séparation d'eau décrite plus loin, séparés à haute pression, par distillation par exemple, soit co-séquestrés avec le CO₂ si c'est l'application choisie pour le CO₂.

Le gain sur l'unité de production du gaz riche en CO₂ peut être considérable si l'on considère une centrale électrique au charbon où il deviendrait envisageable de ne pas retirer le SO₂ du flux qui sera extrait pour séquestration.

Il reste à mentionner le cycle de l'agent antigel. L'essentiel de l'agent antigel sera condensé avec l'eau, ainsi que d'autres impuretés du flux riche en CO₂. Une régénération de l'agent antigel est possible en utilisant un contacteur gaz/liquide, qui utilisera une partie du gaz riche en CO₂ pris avant toute injection d'agent antigel. Le contacteur permettra de récupérer la quasi-intégralité de l'agent antigel. Le gaz est alors mélangé avec le reste du gaz riche en CO₂ réduisant ainsi l'appoint en agent antigel aux fractions extrêmement réduites restant dans le produit et dans les condensats.

Les condensats peuvent être envoyés à la chaudière, si chaudière il y a, pour destruction des traces de l'agent antigel.

Enfin, les traces d'agent antigel et d'eau restant dans le produit riche en CO₂ ne devraient pas gêner la séquestration de ce dernier, ni même son utilisation pour de la récupération assistée de pétrole (Enhanced Oil Recovery). Il est à noter cependant que proche du point critique du CO₂ (74 bars absolus et 31,1°C) les agents antigel (en général des alcools, et notamment le méthanol) et l'eau forment des phases liquides indépendantes du CO₂ qui peut être soit liquide soit gazeux. Une récupération d'une fraction supplémentaire d'agent antigel accompagnant une amélioration de la pureté du produit CO₂ est donc à envisager.

Selon un objet de l'invention, il est prévu un procédé selon la revendication 1.

Selon d'autres objets facultatifs :
- l'antigel est du méthanol
- on réduit la teneur en eau et/ou en d'autres impuretés du mélange extrait de la colonne de lavage avant de le renvoyer à la colonne.
- le compresseur est en acier carbone ou faiblement allié.
- en aval du compresseur, on sépare le fluide comprimé à une température inférieure à la température de solidification de l'eau, sans l'avoir séché par adsorption en amont, par exemple à une température inférieure à 0°C à la pression atmosphérique.
- en aval du compresseur, on sépare le fluide comprimé à une température inférieure à -10°C, sans l'avoir séché par adsorption en amont.
- on épure le mélange par adsorption ou par perméation ou perévaporation ou tirage au vide.
- on refroidit le mélange d'eau et d'antigel en utilisant des frigories provenant d'un appareil de refroidissement et/ou d'épuration du fluide refroidi et comprimé dans le compresseur par vaporisation de CO₂ provenant d'un compresseur de production du CO₂ traité par l'installation.
- on refroidit le mélange d'eau et d'antigel en utilisant des frigories provenant d'un appareil de refroidissement et/ou d'épuration du fluide refroidi et comprimé dans le compresseur par production de froid par un groupe frigorifique qui refroidit le fluide riche en CO₂ ou le fluide refroidi appauvri en eau ou un fluide dérivé d'un de ces fluides ou un fluide dont un de ces fluides est dérivé.
- on refroidit le mélange d'eau et d'antigel en utilisant des frigories provenant d'un appareil de refroidissement et/ou d'épuration du fluide (55) refroidi et comprimé dans le compresseur (61) par utilisation du froid produit par détente du fluide refroidi appauvri en eau.
- le fluide refroidi appauvri en eau est détendu lors d'une cryocondensation solide ou d'une antisublimation.

Selon un autre objet de l'invention, il est prévu un appareil selon la revendication 10.

L'antigel peut être, entre autres, du méthanol.

Eventuellement le compresseur est en acier carbone ou acier faiblement allié.

L'appareil peut comprendre des moyens pour réduire la teneur en eau du mélange extrait de la colonne de lavage et/ou des moyens pour réduire la teneur en impuretés autres que l'eau du mélange extrait de la colonne de lavage.

Les moyens pour extraire l'eau du fluide refroidi peuvent être constitués par un séparateur de phases.
- Le fluide refroidi appauvri en eau comprimé dans le compresseur peut être refroidi et puis traité par lavage pour enlever des impuretés, telles que le NOx, le méthanol ou l'eau pour produire un liquide enrichi en impuretés et un gaz épuré.
- Le liquide enrichi en impuretés est renvoyé à la colonne de lavage.

Pour produire les frigories, on peut :
- Utiliser un compresseur de CO₂ purifié dans l'unité ou servant de cycle frigorifique, l'intérêt est de mutualiser un équipement pour plusieurs fonctions.
- Utiliser un groupe frigorifique existant sur le procédé (en amont ou en aval) (ammoniaque ou autre).
- Utiliser du froid produit par la détente du fluide traité, par exemple dans le cadre de la « cryocondensation solide » ou « antisublimation »

Eventuellement on peut prévoir le dégazage et recyclage dans le flux riche en CO₂ de l'antigel condensé, avec l'éventuelle eau entraînée après la colonne de refroidissement lors des étapes de compression et refroidissement du flux 55, ainsi que de l'antigel entraîné avec la purge d'eau 43 par mise en contact avec le flux riche en CO₂ en amont du refroidissement sous la température de 0°C.

Eventuellement on peut connecter en parallèle de n (n>=1) sections de dégazage de l'agent antigel pour augmenter le reflux liquide, le flux liquide passant successivement dans ces différentes sections avec pompage intermédiaire, le flux gazeux se répartissant équitablement entre les différentes sections.

Eventuellement on peut utiliser au moins un tronçon de garnissage en gaze permettant des taux de reflux faible dans un tronçon avec garnissage pour le dégazage du méthanol (tronçon C et D).

On peut prévoir l'extraction de condensats riches en antigel (méthanol par exemple) et eau dans l'unité cryogénique et recyclage de l'antigel comme décrit ci-dessus.

Le procédé est compatible avec des teneurs en SO₂ < 100ppm vol, même avec des teneurs en SO₂ < 2000ppm vol, voire avec des teneurs en SO₂ < 20000ppm vol dans le fluide riche en CO₂.

Après la compression du fluide appauvri en eau, il est possible de refroidir et de condenser le fluide. Dans ce cas et en présence de composés pouvant réagir avec le méthanol, comme les NOx par exemple, il est recommandé de diluer le fluide sous pression provenant de la compression avant la condensation par (fluide 64 sur les figures) :
- de l'eau et/ou
- du méthanol et/ou
- du CO₂ liquide

Il est envisageable de recycler au moins une partie du condensat produit par la condensation du fluide vers la colonne de lavage. Puisque le condensat est riche en méthanol et éventuellement NOx, il peut servir pour la neutralisation des SOx selon les réactions connues d'oxydation du SO₂ en SO₃ par le NO₂, permettant d'abattre le SO₃ avec de l'eau sous la forme d'acide sulfurique.

Autrement une partie du condensat peut être envoyée à une chaudière.

Eventuellement le compresseur est en acier carbone ou acier faiblement allié.

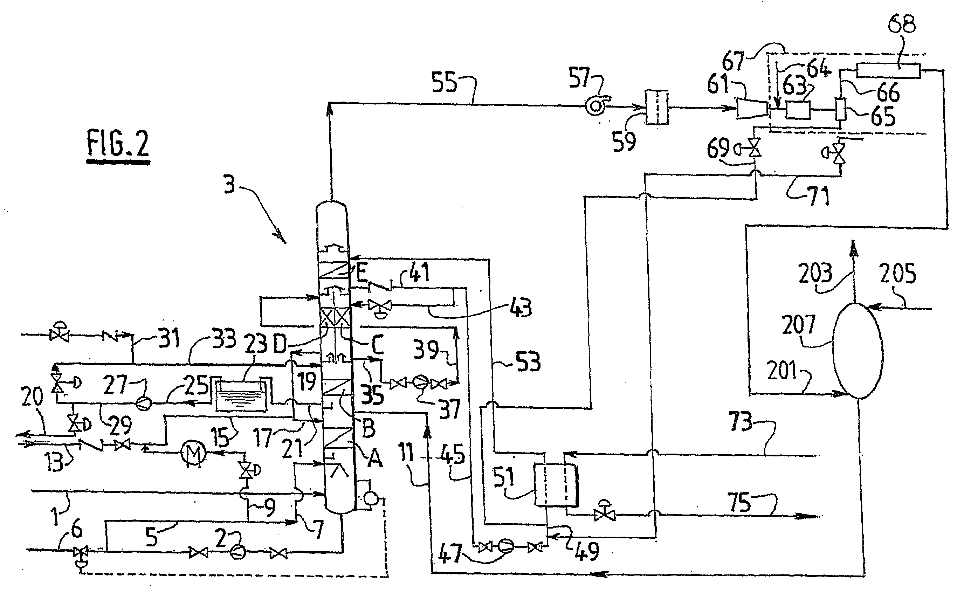

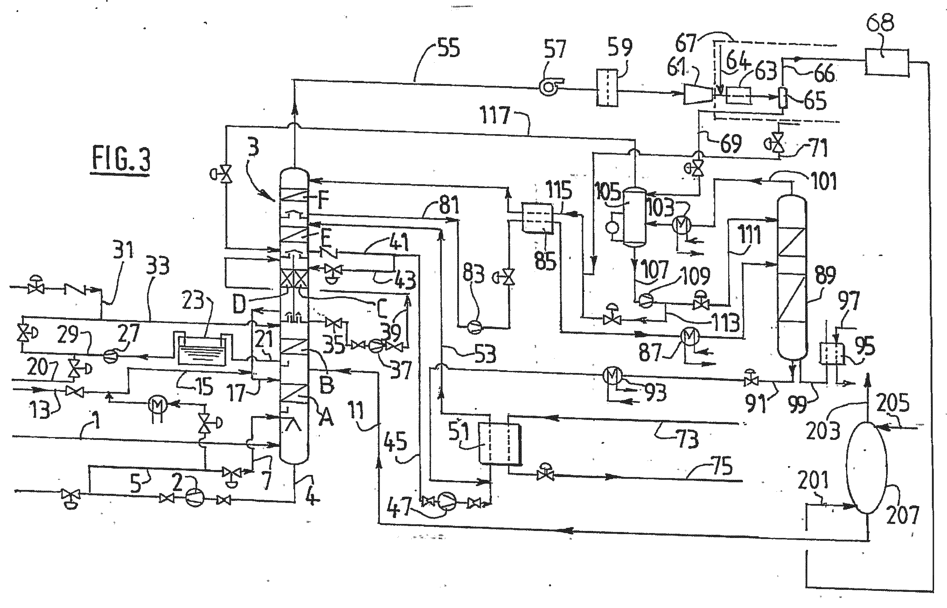

L'invention sera décrite en plus de détail en se référant aux figures, dont la Figure 2 illustre un procédé comparatif et la Figure 3 illustre un procédé selon l'invention.

Dans la Figure 2, un fluide 1 riche en CO₂ et humide est envoyé à une colonne de lavage 3 opérant à une pression inférieure à 10 bars, de préférence à la pression atmosphérique. Le fluide est d'abord humidifié par une arrivée d'eau 7. L'eau est extraite en cuve de la colonne 3, pompée par une pompe 2 et divisée en deux. Une partie 6 sert de purge et le reste 5 est divisé en deux pour former l'eau 7 rajoutée à la colonne 3 et un débit 9 mélangé avec une arrivée éventuelle d'eau 13. Le mélange formé sert à refroidir le fluide dans le tronçon A de la colonne par lavage avec l'eau. Un appoint d'agent basique 31 est rajouté au débit d'eau 33 qui lave le fluide dans le tronçon B. Le débit 33 est formé par un cycle comprenant la conduite 21 reliée à la colonne en dessous du tronçon B, un réservoir 23, des conduites 25 et 29 et une pompe 27. La boucle est purgée par le fluide 20. Ce lavage dans le tronçon B est optionnel et sert à enlever des SOX présents dans le fluide 1 ou d'autres acides forts qui ne seraient pas arrêtés par la simple mise en contact avec l'eau dans les tronçons inférieurs.

Les tronçons C, D, E servent à effectuer le refroidissement du gaz riche en CO₂ et la récupération de l'agent antigel, dans ce cas, du méthanol. Un débit d'eau mélangé avec 20% environ de méthanol est envoyé en tête de la colonne 3 à une température de -15°C via la conduite 53. Ce débit refroidit le gaz montant dans le tronçon E et un liquide enrichi en eau s'accumule en dessous de ce tronçon. Ce liquide 41 est soutiré et divisé en deux. Une partie 43 est renvoyée en tête du tronçon C qui constitue un tronçon de garnissage à section semi-circulaire séparé d'un autre tronçon à section semi-circulaire D par une partition. La partition peut aussi séparer les deux sections en deux zones concentriques. Tout le liquide renvoyé à la colonne est envoyé à la section C plutôt qu'à la section D pour assurer un fort taux de reflux dans la section C. Le liquide qui est descendu à travers le tronçon C est recueilli dans la conduite 35, pompé par la pompe 37 et renvoyé en tête du tronçon D. Le liquide 19 formé en dessous du tronçon D est envoyé en tête du tronçon A et comprend surtout de l'eau. Le reste du liquide extrait du tronçon E est évacué via la canalisation 45 puis pompé par la pompe 47 pour former le débit 49 auquel on a ajouté l'appoint d'agent antigel 71 et le retour des condensats contenant de l'agent antigel de la partie aval du procédé. Le fluide 49 est refroidi dans l'échangeur 51 au moyen d'un débit de CO₂ liquide provenant d'un appareil d'épuration du gaz 55 produit en tête de la colonne 3. Le liquide refroidi 53 est envoyé en tête du tronçon E. Un gaz 55 contenant 1500ppm d'eau environ sort en tête de la colonne 3, est comprimé dans un compresseur 57 en acier carbone ou faiblement allié, épuré par une étape d'épuration fine 59 comme dans l'art antérieur (filtré), les organes de filtration peuvent aussi être constitués d'acier au carbone ou faiblement allié et ensuite le gaz est comprimé dans un compresseur 61 en acier carbone ou faiblement allié. Ensuite suivent éventuellement une épuration facultative du gaz riche en CO₂ de ses constituants légers (oxygène, argon, hydrogène, monoxyde de carbone, azote, etc.) et/ou de ses constituants plus lourds (NO₂, N₂O₄, SO₂, méthanol, eau, etc.), les variantes possibles de cette étape sont abondamment décrites dans de précédentes demandes de brevet et éventuellement une étape de compression du produit final riche en CO₂ ou de liquéfaction du produit final riche en CO₂ afin de le mettre à disposition d'un organe de transport (par canalisation ou bateau) ou pour son utilisation dans un procédé. Dans la figure, le gaz est refroidi dans un échangeur 63 et séparé dans un séparateur de phases 65. La partie gazeuse 66 est épurée et la partie liquide 69, contenant du méthanol et de l'eau, est renvoyée vers l'échangeur 51. Un débit d'appoint de méthanol 71 est également rajouté en amont de l'échangeur 51 pour compenser les pertes d'agent antigel via les purges liquides de la colonne 3 et dans le gaz 66.

Un débit de NO₂ de purge contenant du méthanol 11 est envoyé au-dessus du tronçon A et en dessous du tronçon B. Ce débit provient d'un appareil d'épuration de dioxyde de carbone situé en aval du pot de séparation de phase 65.

La Figure 3 illustre un procédé selon l'invention capable de produire un fluide riche en CO₂ plus sec que celui de la Figure 2.

Un fluide 1 riche en CO₂ et humide est envoyé à une colonne de lavage 3 opérant à une pression inférieure à 10 bars, de préférence à la pression atmosphérique. Le fluide est d'abord humidifié par une arrivée d'eau 7. L'eau est extraite en cuve de la colonne 3, pompée par une pompe 2 et divisée en deux. Une partie 6 sert de purge et le reste 5 est divisé en deux pour former l'eau 7 rajoutée à la colonne 3 et un débit 9 mélangé avec une éventuelle arrivée d'eau 13. Le mélange formé sert à refroidir le fluide dans le tronçon A de la colonne par mise en contact avec l'eau. Un appoint d'agent basique 31 est rajouté aux débits d'eau 33 qui lave le fluide dans le tronçon B. Le débit 33 est formé par un cycle comprenant la conduite 21 reliée à la colonne en dessous du tronçon B, un réservoir 23, une conduite 25 et une pompe 27. La boucle est purgée par le fluide 20. Ce lavage dans le tronçon B est optionnel et sert à enlever des SOX présents dans le fluide 1 ou d'autres acides forts qui ne seraient pas arrêtés par la simple mise en contact avec l'eau dans les tronçons inférieurs. Les tronçons C, D, E et F servent à effectuer le lavage à l'agent antigel, dans ce cas, du méthanol. Un débit 80 de 99% environ de méthanol mélangé avec un peu d'eau est envoyé en tête de la colonne 3 à une température de -15°C environ. Ce débit lave le gaz montant dans le tronçon F et un liquide enrichi en eau s'accumule en dessous de ce tronçon. Dans ce tronçon F, l'eau du gaz est absorbée dans le débit de lavage riche en méthanol. Ce liquide 81 est soutiré, pompé par la pompe 83, refroidi dans l'échangeur 85, réchauffé dans l'échangeur 87 et envoyé à un point intermédiaire d'une colonne d'épuration 89 fonctionnant comme colonne de distillation. La colonne 89 comprend un rebouilleur 95 et un condenseur de tête 103. Le liquide de cuve 99 est chauffé au moyen d'un débit de vapeur d'eau (ou d'eau chaude) 97 dans le rebouilleur 95 et renvoyé à la colonne 89. Le gaz de tête 101 se condense partiellement dans le condenseur 103 pour former un gaz 117 et un liquide 107 séparé dans un séparateur de phases 105. Le liquide 107 est renvoyé en partie à la colonne 89 comme liquide de reflux 111 et le reste 113 est envoyé à l'échangeur 85, mélangé à un appoint de méthanol 71 venant compenser les pertes de méthanol du système. Ensuite le débit 115 formé est envoyé en tête de la colonne de lavage 3 en deux.

Le gaz de tête 117 est envoyé en dessous du tronçon E.

Le liquide de cuve 91 de la colonne de distillation contenant de l'eau et du méthanol est refroidi une première fois dans l'échangeur 93 contre de l'au de refroidissement puis dans l'échangeur 51 contre le dioxyde de carbone 73 et renvoyé en tête du tronçon E.

Une partie 43 du liquide pris en dessous du tronçon E est renvoyée en tête du tronçon C qui constitue un tronçon de garnissage à section semi-circulaire séparé d'un autre tronçon à section semi-circulaire D par une partition. La partition peut aussi séparer les deux sections en deux zones concentriques. Tout le liquide renvoyé à la colonne est envoyé à la section C plutôt qu'à la section D pour assurer un fort taux de reflux dans la section C. De l'eau avec du méthanol 45 est pompé par la pompe 47 pour former le débit 49 et refroidi dans l'échangeur 51 au moyen d'un débit de CO₂ liquide 73 provenant d'un appareil d'épuration du gaz 55 produit en tête de la colonne 3 ainsi produisant du dioxyde de carbone réchauffé 75. Le liquide refroidi 53 produit en mélangeant les débits 45 et 91 est envoyé en tête du tronçon E. Le liquide qui est descendu à travers le tronçon C est recueilli dans la conduite 35, pompé par la pompe 37 et renvoyé en tête du tronçon D. Le liquide 19 formé en dessous du tronçon D est envoyé en tête du tronçon A et comprend surtout de l'eau. Un gaz 55 contenant 1 ppm d'eau environ sort en tête de la colonne 3, est comprimé dans un compresseur 57, épuré par une étape d'épuration fine 59 comme dans l'art antérieur (filtré) et ensuite le gaz est comprimé dans un compresseur 61 en acier carbone ou faiblement allié. Ensuite suivent éventuellement une épuration facultative du gaz riche en CO₂ de ses constituants légers (oxygène, argon, hydrogène, monoxyde de carbone, azote, etc.) et/ou de ses constituants plus lourds (NO_{2.} N₂O₄, SO₂, méthanol, etc.), les variantes possibles de cette étape sont abondamment décrites dans de précédentes demandes de brevet et éventuellement une étape de compression du produit final riche en CO₂ ou de liquéfaction du produit final riche en CO₂ afin de le mettre à disposition d'un organe de transport (par canalisation ou bateau) ou pour son utilisation dans un procédé. Dans la figure, le gaz est refroidi dans un échangeur 63 et séparé dans un séparateur de phases 65. La partie gazeuse 66 est épurée et la partie liquide 69, contenant du méthanol et de l'eau, est renvoyée vers le séparateur de phases 105.

Afin de réguler la quantité de méthanol envoyé à la colonne de lavage 3, le taux de rebouillage du rebouilleur 95 peut être modifié en fonction de la teneur en méthanol mesuré pour un débit du système, en particulier le débit 115, le débit 53, le débit 81 ou le débit 41, au moyen d'un analyseur mesurant la teneur qui pilote la quantité de chaleur envoyée au rebouillage.

La boucle de méthanol constituée par le débit 81 et le débit 113 doit être épurée pour retirer l'eau prélevée dans le tronçon F sur le gaz riche en CO₂ mais aussi les éventuelles autres impuretés qui pourraient s'accumuler dans la boucle (H₂S, O₂, CO₂, HCl, etc). Il y a plusieurs façons d'épurer la boucle de méthanol :
1) Dégazage de méthanol de la purge d'eau en utilisant le gaz d'alimentation (Figure 3)
   1-1=> Le système de dégazage de méthanol est intégré dans la tour de refroidissement du débit d'alimentation, qui sert également à enlever les SOx et/ou NOx.
      De cette manière, aucun ventilateur supplémentaire n'est requis, la température du gaz de dégazage est abaissée grâce au débit augmenté et une seule tour peut être utilisée pour cumuler les fonctions de refroidissement (tronçon A), épuration de NOx-SOx (tronçon B), dégazage de méthanol, (tronçons C et D), refroidissement pour abaisser le point de rosée (tronçon E) et lavage au méthanol pour réduction d'eau au niveau du ppm (tronçon F).
   1-2=> Grâce au rapport très bas entre le liquide et le gaz quand tout le gaz d'alimentation sert à dégazer la purge d'eau, les éléments suivants peuvent servir à établir l'échange de matière et de chaleur entre le gaz et le liquide :
      - plateaux de distillation
      - garnissages en gaze
      - sections parallèles pour le gaz avec le liquide qui s'écoule en série d'une section à une autre.
2) Lavage du gaz avec du CO₂ liquide dans une boîte froide
3) Adsorbants (toutes sortes: zéolite, charbon actif, etc.) sur les purges de gaz ou de liquide
4) Membrane sur circuit de liquide ou purge
5) Détente rapide de liquide sous vide
6) Perévaporation (système à membranes utilisé autrement pour la séparation d'alcool et d'eau en phases liquide

Après le compresseur 61 des Figures 2 et 3, lors de la condensation du gaz riche en CO₂ et contenant du méthanol, les composés les plus lourds vont se concentrer dans les premières gouttes de condensation. Si le gaz traité contient des NOx, le NO va s'oxyder au moins partiellement en NO₂ ou N₂O₄ avec l'oxygène du gaz. La réaction d'oxydation étant accélérée lors d'une élévation de la pression et d'un abaissement de la température, du NO₂ sera présent dans les premières gouttes de condensation s'il y a des NOx dans le gaz traité. Le méthanol va se condenser aussi dès les premières gouttes.

Il est connu que le méthanol et les NOx peuvent réagir selon de multiples mécanismes, tant en phase gaz qu'en phase liquide, certaines réactions impliquant l'eau et/ou l'acide nitrique, d'autres uniquement le méthanol et le NO₂. Les composés ainsi formés peuvent être réactifs.

On peut notamment citer les réactions suivantes :
- 2NO₂ +CH₃OH ⇄ CH₃ONO₂ + HNO₂
- HCOOH +HNO₃ ⇄ 3CO₂+4H₂O+NO
- N₂O₄ +CH₃OH ⇄ CH₃ONO + HNO₃
- 6HNO₃ +5CH₃OH ⇄ 5CO₂+13 H₂O+3N₂

Une façon de limiter l'impact de ces réactions est de diluer les oxydes d'azote dans les premières gouttes de condensation. Pour ce faire, on peut injecter en 64 en amont de l'échangeur 63 sur les figures, de l'eau ou du méthanol ou du CO₂ liquide en quantité suffisante pour réduire la teneur de NOx dans les phases liquides.

Chaque solution de dilution possède ses inconvénients (pertes de produit « noble » comme le méthanol, pertes frigorifiques en cas de mise en contact de CO₂ liquide (environ -20°C dans notre exemple où le flux est traité à 20bars) avec un gaz à 5°C, risques de corrosion en cas d'ajout d'eau, etc.).

Le gaz d'alimentation 55, après l'étape de refroidissement dans la colonne 3 et une première compression avec le compresseur 61 peut être introduit dans la boite froide 67 et refroidi dans les échangeurs 63 et 68. Il peut y avoir un premier pot de condensation partielle 65 où une grande part du méthanol, et de l'eau s'il en reste, est condensée et recyclé vers la colonne à basse pression comme fluide 69.

Après l'échangeur 68, le gaz refroidi 201 va être lavé des traces de méthanol, eau et NOx éventuellement, ainsi que de tout autre composé plus lourds que le CO₂ dans une colonne à garnissage 207. Le gaz 201 est introduit en cuve et du CO₂ liquide pur 205 (c'est-à-dire épuré des composés lourds) est injecté pour assurer le reflux en tête de colonne. Le liquide de cuve 11 de la colonne 207 est recyclé vers la colonne 3 entre les tronçons A et B pour y récupérer le méthanol, l'eau sera purgée comme décrit précédemment. On peut aussi envisager d'y neutraliser les NOx avec une solution basique (tronçon B).

Notons qu'en amont de la première condensation dans le pot séparateur 65, on peut injecter un fluide pour diluer les NOx dans les phases liquides. Ce fluide 64 de dilution peut être de l'eau, du CO₂ liquide ou du méthanol.

Les condensats 69 éventuellement chargés en produits de réaction « NOx + Méthanol » peuvent être recyclés vers la tour de lavage 3, le NO₂ pourra réagir avec l'eau présente et former de l'acide nitrique qui pourrait être neutralisé dans le tronçon facultatif B, le méthanol pourra être dégazé par le gaz riche en CO₂ montant de la section A et ainsi être recyclé dans le procédé. Une autre façon de gérer ces condensats est de les incinérer dans la chaudière, ce qui augmente le besoin d'appoint en méthanol mais limite les risques posés par le recyclage des produits de réaction « NOx + méthanol ».

## Revendications

1. Procédé de compression d'un fluide riche en CO₂ contenant au moins 30% molaires de CO₂ en base sèche et de l'eau dans lequel le fluide riche en CO₂ est comprimé dans un compresseur (57, 61), en amont de l'étape de compression, un agent antigel est mélangé avec le fluide riche en CO₂ contenant de l'eau, le fluide riche en CO₂ contenant l'agent antigel (1) est refroidi, de l'eau est séparée du fluide refroidi en envoyant le fluide refroidi riche en CO₂ contenant de l'eau à une colonne de lavage (3) alimentée en tête par un mélange (53) d'eau et d'antigel où il se refroidit et est séparé de l'eau et le fluide refroidi appauvri en eau (55) est extrait en tête de la colonne et envoyé au compresseur, on extrait de l'eau (4) de la cuve de la colonne de lavage, on extrait un mélange d'eau et d'antigel (81) dans la colonne de lavage à un niveau intermédiaire de celle-ci, **caractérisé en ce que** on refroidit ledit mélange (81), on l'épure par distillation dans une colonne d'épuration (89) ayant un rebouilleur de cuve (95), on extrait un liquide (91) contenant de l'eau et de l'antigel en cuve de la colonne d'épuration, on renvoie le liquide en tête de colonne de lavage et on règle le taux de rebouillage du rebouilleur de cuve en fonction de la teneur en antigel du liquide (41, 53, 115) alimentant un tronçon de refroidissement (E, F) de la colonne de lavage ou du liquide extrait en cuve de la colonne d'épuration ou du liquide (81) qui est le mélange d'eau et d'antigel soutiré d'un tronçon (F) à un niveau intermédiaire de la colonne de lavage.

2. Procédé dans lequel on réduit la teneur en eau et/ou en d'autres impuretés du mélange (81) extrait de la colonne de lavage (3) avant de le renvoyer à la colonne.

3. Procédé selon la revendication 1 ou 2 dans lequel le compresseur (61) est en acier carbone ou faiblement allié.

4. Procédé selon l'une des revendications précédentes dans lequel, en aval du compresseur (61) on sépare le fluide comprimé à une température inférieure à la température de solidification de l'eau, sans l'avoir séché par adsorption en amont, par exemple à une température inférieure à 0°C à la pression atmosphérique.

5. Procédé selon la revendication 4 dans lequel, en aval du compresseur (61), on sépare le fluide comprimé à une température inférieure à -10°C, sans l'avoir séché par adsorption en amont.

6. Procédé selon l'une des revendications précédentes dans lequel on épure le mélange par adsorption ou par perméation ou perévaporation ou tirage au vide.

7. Procédé selon l'une des revendications précédentes dans lequel on refroidit le mélange d'eau et d'antigel en utilisant des frigories provenant d'un appareil de refroidissement et/ou d'épuration du fluide (55) refroidi et comprimé dans le compresseur (61) par vaporisation de CO₂ provenant d'un compresseur de production du CO₂ traité par l'installation.

8. Procédé selon l'une des revendications précédentes dans lequel on refroidit le mélange d'eau et d'antigel en utilisant des frigories provenant d'un appareil de refroidissement et/ou d'épuration du fluide (55) refroidi et comprimé dans le compresseur (61) par production de froid par un groupe frigorifique qui refroidit le fluide riche en CO₂ ou le fluide refroidi appauvri en eau ou un fluide dérivé d'un de ces fluides ou un fluide dont un de ces fluides est dérivé.

9. Procédé selon l'une des revendications précédentes dans lequel on refroidit le mélange d'eau et d'antigel en utilisant des frigories provenant d'un appareil de refroidissement et/ou d'épuration du fluide (55) refroidi et comprimé dans le compresseur (61) par utilisation du froid produit par détente du fluide refroidi appauvri en eau.

10. Procédé selon la revendication 9 dans lequel le fluide refroidi appauvri en eau est détendu lors d'une cryocondensation solide ou d'une antisublimation.

11. Appareil de traitement d'un fluide riche en CO₂ contenant au moins 30% molaires de CO₂ en base sèche et de l'eau comprenant un compresseur (61), en amont du compresseur une colonne (3) de lavage du fluide riche en CO₂, une conduite d'amenée (53) d'un mélange d'agent antigel et d'eau reliée à un niveau supérieur de la colonne, une conduite (1) d'amenée du fluide riche en CO₂ contenant de l'eau reliée à un niveau inférieur de la colonne de lavage, une conduite (4) pour extraire de l'eau de la cuve de la colonne de lavage, une conduite (41) pour soutirer un mélange d'eau et d'agent antigel de la colonne de lavage reliée à un niveau intermédiaire de la colonne de lavage, des moyens de refroidissement (51) reliés à la conduite pour soutirer le mélange de la colonne de lavage et une conduite d'amenée du mélange (81) soutiré de la colonne de lavage, et **caractérisé en ce qu'**il comprend une colonne d'épuration (89), autre que la colonne de lavage, reliée à la conduite pour soutirer le mélange et la conduite d'amenée du mélange soutiré de la colonne de lavage, des moyens (55) pour envoyer le fluide refroidi épuré en eau au compresseur, des moyens pour extraire un mélange d'eau et d'antigel dans la colonne de lavage à un niveau intermédiaire de celle-ci, des moyens pour refroidir le mélange, la colonne d'épuration ayant un rebouilleur de cuve (95) pour épurer le mélange par distillation, des moyens pour extraire un liquide contenant de l'eau et de l'antigel en cuve de la colonne d'épuration et des moyens pour renvoyer le liquide contenant de l'eau et de l'antigel en tête de colonne de lavage et des moyens pour régler le taux de rebouillage du rebouilleur de cuve en fonction de la teneur en antigel du mélange alimentant un tronçon de refroidissement (E, F) de la colonne de lavage ou du liquide extrait en cuve de la colonne d'épuration ou d'un liquide (81) qui est le mélange d'eau et d'antigel soutiré d'un tronçon intermédiaire (F) de la colonne de lavage.

12. Appareil selon la revendication 11 dans lequel le compresseur (61) est en acier carbone ou acier faiblement allié.

13. Appareil selon la revendication 11 ou 12 comprenant des moyens pour réduire la teneur en eau du mélange extrait de la colonne de lavage.

14. Appareil selon la revendication 11, 12 ou 13 comprenant des moyens pour réduire la teneur en impuretés autres que l'eau du mélange extrait de la colonne de lavage.

## Patentansprüche

1. Verfahren zum Verdichten einer CO₂-reichen Flüssigkeit, die zumindest 30 Massen-% an CO₂ auf Trockenbasis und Wasser enthält, wobei die CO₂-reiche Flüssigkeit in einem Verdichter (57, 61) verdichtet wird, stromaufwärts des Verdichtungsschrittes ein Frostschutzmittel mit der CO₂-reichen Flüssigkeit vermischt wird, die Wasser enthält, die CO₂-reiche Flüssigkeit, die das Frostschutzmittel (1) enthält, gekühlt wird, Wasser aus der gekühlten Flüssigkeit abgeschieden wird, indem man die gekühlte CO₂-reiche Flüssigkeit, die Wasser enthält, in eine Waschkolonne (3) schickt, welche am Kopf mit einem Gemisch (53) aus Wasser und aus Frostschutzmittel beschickt wird, wo es sich abkühlt und vom Wasser abgeschieden wird, und die gekühlte, wasserarme Flüssigkeit (55) am Kopf der Kolonne extrahiert und zum Verdichter geschickt wird, man Wasser (4) aus dem Behälter der Waschkolonne extrahiert, man ein Gemisch aus Wasser und Frostschutzmittel (81) in der Waschkolonne auf einer Zwischenstufe derselben extrahiert, **dadurch gekennzeichnet, dass** man das Gemisch (81) abkühlt, man es durch Destillation in einer Stripperkolonne (89) reinigt, die einen Behälter-Verdampfer (95) aufweist, man eine Flüssigkeit (91) im Behälter der Stripperkolonne extrahiert, die Wasser und Frostschutzmittel enthält, man die Flüssigkeit in den Kopf der Waschkolonne zurückschickt, und man die Verdampfungsrate des Behälter-Verdampfers in Abhängigkeit vom Frostschutzmittelgehalt in der Flüssigkeit (41, 53, 115) einstellt, die in einen Kühlabschnitt (E, F) der Waschkolonne zugeführt wird, oder in der Flüssigkeit, die im Behälter der Stripperkolonne extrahiert wird, oder in der Flüssigkeit (81), die das Gemisch aus Wasser und Frostschutzmittel ist, das aus einem Abschnitt (F) in einer Zwischenstufe der Waschkolonne entnommen wird.

2. Verfahren, wobei man den Gehalt an Wasser und/ oder an anderen Verunreinigungen des Gemisches (81) reduziert, das aus der Waschkolonne (3) extrahiert wird, bevor man es zur Kolonne zurückschickt.

3. Verfahren nach Anspruch 1 oder 2, wobei der Verdichter (61) aus Kohlenstoffstahl oder schwach legiertem Stahl gefertigt ist.

4. Verfahren nach einem der vorherigen Ansprüche, wobei man stromabwärts des Verdichters (61) die Flüssigkeit abscheidet, die bei einer Temperatur verdichtet wird, die geringer ist, als die Erstarrungstemperatur des Wassers, ohne sie stromaufwärts durch Adsorption, beispielsweise auf einer Temperatur unter 0°C auf atmosphärischem Druck getrocknet zu haben.

5. Verfahren nach Anspruch 4, wobei man die verdichtete Flüssigkeit stromabwärts des Verdichters (61) auf einer Temperatur unter -10°C abscheidet, ohne sie stromaufwärts durch Adsorption getrocknet zu haben.

6. Verfahren nach einem der vorherigen Ansprüche, wobei man das Gemisch durch Adsorption oder durch Permeation oder Pervaporation oder Evakuierung reinigt.

7. Verfahren nach einem der vorherigen Ansprüche, wobei man das Gemisch aus Wasser und Frostschutzmittel abkühlt, indem man Frigorien verwendet, die aus einem Kühl- und/ oder Reinigungsgerät für die Flüssigkeit (55) stammen, die im Verdichter (61) durch Verdunstung von CO₂ gekühlt und verdichtet wird, das aus einem Verdichter zum Erzeugen des von der Installation behandelten CO₂ stammt.

8. Verfahren nach einem der vorherigen Ansprüche, wobei man das Gemisch aus Wasser und Frostschutzmittel abkühlt, indem man Frigorien verwendet, die aus einem Kühl- und/ oder einem Reinigungsgerät für die Flüssigkeit (55) stammen, die im Verdichter (61) durch Erzeugen von Kälte durch ein Kühlaggregat gekühlt und verdichtet wird, die die CO₂-reiche Flüssigkeit oder die gekühlte, wasserarme Flüssigkeit oder eine Flüssigkeit kühlt, die aus einer dieser Flüssigkeiten abgeleitet wird oder einer Flüssigkeit abgeleitet wird, aus der eine dieser Flüssigkeiten abgeleitet wird.

9. Verfahren nach einem der vorherigen Ansprüche, wobei man das Gemisch aus Wasser und Frostschutzmittel abkühlt, indem man Frigorien verwendet, die aus einem Kühl- und/ oder einem Reinigungsgerät für die Flüssigkeit (55) stammen, die im Verdichter (61) durch die Verwendung der Kälte gekühlt und verdichtet wird, die durch Entspannen der gekühlten, wasserarmen Flüssigkeit erzeugt wird.

10. Verfahren nach Anspruch 9, wobei die gekühlte, wasserarme Flüssigkeit bei einer soliden Kryokondensation oder einer Desublimation entspannt wird.

11. Gerät zur Behandlung einer CO₂-reichen Flüssigkeit, die zumindest 30 Massen-% an CO₂ auf Trockenbasis und Wasser enthält, einen Verdichter (61) umfassend, stromaufwärts des Verdichters eine Kolonne (3) zum Waschen der CO₂-reichen Flüssigkeit, eine Leitung zum Zuführen (53) eines Gemisches aus Frostschutzmittel und Wasser, verbunden mit einer oberen Stufe der Kolonne, eine Leitung zum Zuführen (1) der CO₂-reichen Flüssigkeit, die Wasser umfasst, verbunden mit einer unteren Stufe der Waschkolonne, und eine Leitung (4) zum Extrahieren des Wassers aus dem Behälter der Waschkolonne, eine Leitung (41) zum Entziehen des Gemisches aus Wasser und Frostschutzmittel aus der Waschkolonne, verbunden mit einer Zwischenstufe der Waschkolonne, Mittel zum Kühlen (51), verbunden mit der Leitung zum Entziehen des Gemisches aus der Waschkolonne und eine Leitung zum Zuführen des Gemisches (81), das aus der Waschkolonne entzogen wurde, und **dadurch gekennzeichnet, dass** es eine Stripperkolonne (89) umfasst, anders als die Waschkolonne, verbunden mit der Leitung zum Entziehen des Gemisches und der Leitung zum Zuführen des Gemisches, das aus der Waschkolonne entzogen wird, - Mittel (55) zum Schicken der gekühlten, wasserarmen Flüssigkeit zum Verdichter, Mittel zum Extrahieren eines Gemisches aus Wasser und Frostschutzmittel in der Waschkolonne in einer Zwischenstufe derselben, Mittel zum Kühlen des Gemisches-wobei die Stripperkolonne einen Behälter-Verdampfer (95) aufweist, um das Gemisch durch Destillation zu reinigen, Mittel zum Extrahieren einer Flüssigkeit, die Wasser und Frostschutzmittel enthält, im Behälter der Reinigungskolonne, und Mittel zum Zurückschicken der Flüssigkeit, die Wasser und Frostschutzmittel enthält, in den Kopf der Waschkolonne, und Mittel zum Einstellen der Verdampfungsrate des Behälter-Verdampfers in Abhängigkeit vom Frostschutzmittelgehalt in der Flüssigkeit, die in einen Kühlabschnitt (E, F) der Waschkolonne zugeführt wird, oder in der Flüssigkeit, die im Behälter der Stripperkolonne extrahiert wird, oder in der Flüssigkeit (81), die das Gemisch aus Wasser und Frostschutzmittel ist, die aus einem Zwischenabschnitt (F) der Waschkolonne entnommen wird.

12. Gerät nach Anspruch 11, wobei der Verdichter (61) aus Kohlenstoffstahl oder schwach legiertem Stahl gefertigt ist.

13. Gerät nach Anspruch 11 oder 12, Mittel zum Reduzieren des Wassergehalts im Gemisch umfassend, das aus der Waschkolonne extrahiert wird.

14. Gerät nach Anspruch 11, 12 oder 13, Mittel zum Reduzieren des Gehalts an anderen Verunreinigungen als Wasser im Gemisch umfassend, das aus der Waschkolonne extrahiert wird.

## Claims

1. Method for compressing a CO₂-rich fluid containing at least 30% molar of CO₂ as a dry base and water wherein the CO₂-rich fluid is compressed in a compressor (57, 61), upstream of the step of compression, an antifreeze agent is mixed with the CO₂-rich fluid containing water, the CO₂-rich fluid containing the antifreeze agent (1) is cooled, the water is separated from the cooled fluid by sending the cooled CO₂-rich fluid containing water to a scrubbing column (3) fed at the top by a mixture (53) of water and antifreeze where it is cooled and separated from the water and the water-depleted cooled fluid (55) is extracted at the top of the column and sent to the compressor, water (4) is extracted from the bottom of the scrubbing column, a mixture of water and antifreeze (81) is extracted in the scrubbing column at an intermediate level of the latter, **characterised in that** said mixture (81) is cooled, the mixture is purified by distillation in a purification column (89) having a bottom reboiler (95), a liquid (91) is extracted containing water and antifreeze in the bottom of the purification column, the liquid is returned to the head of the scrubbing column and the amount of reboiling by the bottom reboiler is set according to the antifreeze content (41, 53, 115) feeding a cooling section (E, F) of the scrubbing column or of the liquid extracted from the bottom of the purification column or of a liquid (81) that is the mixture of water and antifreeze withdrawn from a section (F) at an intermediate level of the scrubbing column.

2. Method wherein the content in water and/or in other impurities of the mixture (81) extracted from the scrubbing column (3) is reduced before returning it to the column.

3. Method according to claim 1 or 2 wherein the compressor (61) is made of carbon steel or low alloyed steel.

4. Method according to one of the preceding claims wherein, downstream of the compressor (61) the fluid compressed at a temperature less than the solidification temperature of the water is separated, without having dried it by adsorption upstream, for example at a temperature less than 0°C at atmospheric pressure.

5. Method according to claim 4 wherein, downstream of the compressor (61), the fluid is separated at a temperature less than -10°C, without having dried it by adsorption upstream.

6. Method according to one of the preceding claims wherein the mixture is purified by adsorption or by permeation or pervaporation or vacuum drawing.

7. Method according to one of the preceding claims wherein the mixture of water and antifreeze is cooled using frigories coming from an apparatus for cooling and/or purifying the fluid (55) cooled and compressed in the compressor (61) by vaporisation of CO₂ coming from a compressor for the production of CO₂ treated by the installation.

8. Method according to one of the preceding claims wherein the mixture of water and antifreeze is cooled using frigories coming from an apparatus for cooling and/or purifying the fluid (55) cooled and compressed in the compressor (61) by the production of cold by a cold unit that cools the CO₂-rich fluid or the cooled water-depleted fluid or a fluid derived from one of these fluids or of which one of these fluids is derived.

9. Method according to one of the preceding claims wherein the mixture of water and antifreeze is cooled using frigories coming from an apparatus for cooling and/or purifying the fluid (55) cooled and compressed in the compressor (61) by using the cold produced by expansion of the cooled water-depleted fluid.

10. Method according to claim 9 wherein the cooled water-depleted fluid is expanded during a solid cryocondensation or antisublimation.

11. Apparatus for treating a CO₂-rich fluid containing at least 30% molar of CO₂ as a dry base and water comprising a compressor (61), upstream of the compressor a column (3) for scrubbing the CO₂-rich fluid, a duct for conveying (53) a mixture of antifreeze agent and of water connected to an upper level of the column, a duct (1) for conveying CO₂-rich fluid containing water connected to a lower level of the scrubbing column, a duct (4) for extracting water from the bottom of the scrubbing column, a duct (41) for withdrawing a mixture of water and of antifreeze agent from the scrubbing column connected to an intermediate level of the scrubbing column, means for cooling (51) connected to the duct in order to withdraw the mixture from the scrubbing column and a conduct for conveying the mixture (81) withdrawn from the scrubbing column, and **characterised in that** it comprises a purification column (89), other than the scrubbing column, connected to the duct for withdrawing the mixture and the duct for conveying the mixture withdrawn from the scrubbing column, means (55) for sending the water purified cooled fluid to the compressor, means for extracting a mixture of water and of antifreeze in the scrubbing column at an intermediate level of the latter, means for cooling the mixture, with the purification column having a bottom reboiler (95) in order to purify the mixture by distillation, means for extracting a liquid containing water and antifreeze in the bottom of the purification column and means for returning the liquid containing water and antifreeze to the top of the scrubbing column and means for setting the amount of reboiling of the bottom reboiler according to the content in antifreeze of the mixture feeding a cooling section (E, F) of the scrubbing column or of the liquid extracted from the bottom of the purification column or a liquid (81) that is a mixture of water and of antifreeze withdrawn from an intermediate section (F) of the scrubbing column.

12. Apparatus according to claim 11 wherein the compressor (61) is made of carbon steel or low alloyed steel.

13. Apparatus according to claim 11 or 12 comprising means for reducing the content in water of the mixture extracted from the scrubbing column.

14. Apparatus according to claim 11, 12 or 13 comprising means for reducing the content in impurities other than the water of the mixture extracted from the scrubbing column.
